(19) Europäisches Patentamt / European Patent Office / Office européen des brevets

(11) **EP 3 819 813 B1**

(12) **EUROPEAN PATENT SPECIFICATION**

(45) Date of publication and mention
of the grant of the patent:
**21.01.2026 Bulletin 2026/04**

(21) Application number: **19207921.8**

(22) Date of filing: **08.11.2019**

(51) International Patent Classification (IPC):
**G06V 20/59** (2022.01)  **G06V 40/20** (2022.01)

(52) Cooperative Patent Classification (CPC):
**G06V 20/597**; G06V 40/20

(54) **DETERMINING AN AREA-OF-INTEREST IN A HEAD-EYE-TRACKING APPLICATION**

BESTIMMUNG EINES BEREICHS VON INTERESSE IN EINER
KOPF-AUGEN-VERFOLGUNGSANWENDUNG

DÉTERMINATION D'UNE ZONE D'INTÉRÊT DANS UNE APPLICATION DE SUIVI DE LA TÊTE ET
DES YEUX

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**12.05.2021 Bulletin 2021/19**

(73) Proprietor: **HONDA MOTOR CO., LTD.**
**Tokyo 105-8404 (JP)**

(72) Inventor: **Fuchs, Stefan**
**63073 Offenbach am Main (DE)**

(74) Representative: **Beder, Jens**
**Mitscherlich PartmbB**
**Patent- und Rechtsanwälte**
**Karlstraße 7**
**80333 München (DE)**

(56) References cited:
**EP-A1- 3 506 149**

- JHA SUMIT ET AL: "Probabilistic Estimation of
the Gaze Region of the Driver using Dense
Classification", 2018 21ST INTERNATIONAL
CONFERENCE ON INTELLIGENT
TRANSPORTATION SYSTEMS (ITSC), IEEE, 4
November 2018 (2018-11-04), pages 697 - 702,
XP033470296, ISBN: 978-1-7281-0321-1,
[retrieved on 20181207], DOI: 10.1109/
ITSC.2018.8569709

- JHA SUMIT ET AL: "Estimation of Gaze Region
Using Two Dimensional Probabilistic Maps
Constructed Using Convolutional Neural
Networks", ICASSP 2019 - 2019 IEEE
INTERNATIONAL CONFERENCE ON
ACOUSTICS, SPEECH AND SIGNAL
PROCESSING (ICASSP), IEEE, 12 May 2019
(2019-05-12), pages 3792 - 3796, XP033566345,
DOI: 10.1109/ICASSP.2019.8683794

- KIM H-I ET AL: "Gaze estimation using a webcam
for region of interest detection", SIGNAL, IMAGE
AND VIDEO PROCESSING, SPRINGER LONDON,
LONDON, vol. 10, no. 5, 27 October 2015
(2015-10-27), pages 895 - 902, XP035975243,
ISSN: 1863-1703, [retrieved on 20151027], DOI:
10.1007/S11760-015-0837-6

- TAWARI ASHISH ET AL: "Robust and continuous
estimation of driver gaze zone by dynamic
analysis of multiple face videos", 2014 IEEE
INTELLIGENT VEHICLES SYMPOSIUM
PROCEEDINGS, IEEE, 8 June 2014 (2014-06-08),
pages 344 - 349, XP032620278, [retrieved on
20140715], DOI: 10.1109/IVS.2014.6856607

EP 3 819 813 B1

**Description**

The invention concerns a method and a system for determining an area-of-interest in a head-eye-tracking application.

Assistance systems that assist a human in performing a task form an increasing part of a current dynamically changing environment, in which a human person and technical objects are interacting. For example, driver assistance systems support the human driver in navigating a vehicle in a traffic environment.

Autonomous systems such as robots collaborate closely with human workers in manufacturing cells of a contemporary factory. These robots may enable experienced workers to fulfill their jobs for an extended time to delay their date of retirement due to decreasing physical abilities.

Active assistant living, also called ambient assisted living (AAL) provides assistance systems, which aim at supporting the day-to-day life of persons, for example, retired persons in their ambient living environment.

These examples of assistance systems largely benefit from, or even require, information on a state of the assisted person on future intentions of the person and of cognitive processes, the person performs.

Measured eye tracking data represents an important cue for concluding on the person's attention, his/her intentions and the cognitive processes the person performs. Eye gaze tracking is widely considered as an efficient method to quantitatively measure a person's visual attention. In driving experiments in a virtual driving environment, eye gaze tracking forms an important basis for detecting a driver's visual attention.

Visually measured eye tracking data provides a basis for determining the person's gaze. The gaze may be determined and used in a relative manner, for example to discriminate between a left focus and a right focus by determining a pupil-canthi-ratio (PCR), which differentiates between three possible states. The gaze may be determined and used in an absolute manner, for example, to estimate where the person is looking at in a three-dimensional environment. The person's gaze can be used to detect areas-of-interest (AoI), regions-of-interest or points-of-interest (PoI) in the three-dimensional environment surrounding the person.

Nevertheless, estimating a spatial direction of gaze and determining an area-of-interest based on measured eye-tracking data is a demanding task relying heavily on precise and accurate measurements provided by an eye-tracking device. Current eye tracking devices can be error-prone due to inaccurate measurements. Eye-tracking measurements may include large measurement noise components and significant measurement errors.

Current proposals of improving eye-tracking and gaze determination use an individual calibration of a gaze-tracking system in order to improve a subsequent area-of-interest analysis on data measured by the gaze-tracking system. However, adapting the calibration of an eye-tracking system to an individual person may result in an increased accuracy of the provided eye-tracking data, but the calibration process is time consuming and results in an inflexibility due to pairing the gaze-tracking system with only one particular user.

An alternate approach for improving an area-of-interest analysis focuses on a specific area design, for example an area shape of a presumed area-of-interest based on expected accuracies of the measured eye-tracking values or on area-of-interest accuracies required for subsequent processing.

These current eye-tracking applications may rely on remote cameras for monitoring the eyes of the person in order to conduct measurements for the eye-tracking and gaze detection processing. However, gaze detection is then only possible over a rather narrow field-of-view, in which reliably measured data for the monitored person provided by the camera is available. There exist approaches to enlarge the angular field-of-view by using head-pose estimation as a coarse measure for angles exceeding the angles in which eye-gaze tracking is available. However, head-pose estimation provides only coarse estimated results for an area-of-interest in regions to the side of the person. Hua Cai and Yingzi Lin propose in "An integrated head pose and eye gaze tracking approach to non-intrusive visual attention measurement for wide FOV simulators", in: Virtual Reality, Springer, London: 2012, DOI 10.1007/s10055-010-0171-9 a similar approach including head-pose tracking for specifically tracking regions-of-interest laterally to the field-of-view that is covered by an eye-gaze tracking process.

Sumit Jha and Carlos Busso, Probabilistic estimation of the gaze region of the driver using dense classification. 2018 21st International conference on intelligent transportation systems (ITSC), IEEE, 4th November 2018, pages 697 to 702, XP033470296, discuss the useful ability to monitor the visual attention of a driver. The publication aims at establishing a probabilistic relationship using deep learning between a gaze angle of the driver and his/her head pose, which are not deterministically related due to the interplay between head and eye movements.

In "Estimating of gaze region using two-dimensional probabilistic maps constructed using convolutional neural networks", IEEE International Conference on Acoustics, Speech and Signal Processing 2019 (ICASSP 2019), 12th May 2019, pages 3792 to 3796, XP033566345, DOI:10.1109/ICASSP.2019.8683794, Sumit Jha and Carlos Busso disclose a method for predicting the gaze of a user with deep models purely based on convolutional neural networks (CNN). The approach produces a probabilistic map describing the gaze distribution.

Current gaze-tracking systems are more or less still in a state, which is focused on laboratory scale of use, but not yet flexible and computationally efficient enough for us in a highly dynamic environment and with changing users.

Determining areas-of-interest based on gaze tracking is therefore a technical field, in which improvements with respect to computational efficiency and flexibility avoiding the discussed disadvantages of the state of the art are desirable.

The method for determining an area-of-interest of a person of independent claim 1 and the system for determining an area-of-interest of a person of independent claim 13 provide an improved solution to the technical problems currently encountered by the state of the art approaches.

The invention is set out in the appended claims.

The method for determining an area-of-interest of a person from a spatial direction of gaze of the person based on measured data including at least one of head pose or eye gaze direction data comprises obtaining, from at least one sensor, at least one of left eye-gaze direction data for a left eye of the person and right eye-gaze direction data for a right eye of the person, and obtaining head pose data including a head pose direction of the person. The obtained at least one of left eye gaze direction data or right eye gaze direction data is transformed into the head coordinate system. Then, the method calculates a spatial probability map including probability density values in the head coordinate system from the respectively obtained left eye-gaze direction data, right eye-gaze direction data and the obtained head pose data. The probability map is calculated as an accumulated probability map based on the obtained head pose data and the transformed left eye gaze direction data and/or transformed right gaze direction data. The head coordinate system is generated by a sphere or partial sphere around the head of the person as center. The probability density values of the spatial probability map define a spatial probability distribution of at least one of the left eye gaze direction, the right eye gaze direction and the head pose direction.

The method comprises determining an area-of-interest based on the calculated probability map. Determining the area-of-interest comprises steps of generating at least one candidate area-of-interest defined by a polygon with a plurality of corner points in the head coordinate system, wherein the area-of-interest is determined based on the accumulated probability map. The method comprises calculating for the at least one candidate area-of-interest a probability value by integrating the probability density values of the probability map respectively over the at least one candidate area-of-interest.

The at least one candidate area-of-interest is selected as the determined area-of-interest in case the calculated probability value is equal to a threshold or exceeds the threshold. The determined area-of-interest is then output to an assistance system, in particular a driver assistance system, an ambient living assistance system or a collaborative autonomous system, for supporting the person in performing a task.

Preferably, the at least one candidate area-of-interest is selected as the determined area-of-interest in case the calculated probability value is equal to a predetermined threshold value or exceeds the predetermined threshold value. Alternatively, the at least one candidate area-of-interest is selected as the determined area-of-interest in case the calculated probability value is equal to or exceeds a dynamically determined threshold value.

Further, the at least one candidate area-of-interest is selected as the determined area-of-interest in case the calculated probability value is equal to or exceeds a relative threshold value. A relative threshold value may be a calculated probability value of at least one other candidate area-of-interest, for example.

In a particular case, this enables to determine, whether the person looks at the specific candidate area-of-interest or anywhere outside the candidate area-of-interest.

For example, a candidate area-of-interest from plural candidate areas-of-interest is selected, which has the highest calculated probability value. This enables to determine, towards which candidate areas-of-interest the person directs its attention. The selected area-of-interest is then a best hypothesis (candidate area-of-interest) for the visual attention of the person.

The method advantageously handles uncertainties associated with measuring eye-gaze or head orientation directly in the area-of-interest determining process. The claimed method exceeds a mere use of head orientation in order to enlarge a working range of the known eye-tracking system, for example. The method uses a (spatial) probability map in the head coordinate system as the basis for the area-of-interest determination. This enables a highly efficient implementation of the automated area-of-interest determination without extensive pre-calibration for each individual user.

The probability map enables determining an area-of-interest by integrating the probability density values included in the respective accumulated probability map for each candidate area-of-interest, for example. Integrating the probability density values may even be simplified to an arithmetic addition operation for the discrete map elements of the probability map and the accumulated probability map in an embodiment. Thus, a flexible approach to evaluate the possible candidate areas-of-interest is possible, which in an embodiment enables a numerically advantageous determination processing for determining the area-of-interest.

The polygon with a plurality of corner points defines in an image or in the environment the area-of-interest. The at least one area-of-interest may be set in advance.

Generating the at least one candidate area-of-interest comprises respectively transforming a predetermined candidate area-of-interest into the head coordinate system.

Preferably in the step of obtaining at least one of the left eye gaze direction data or the right eye gaze direction data is obtained, and the method further comprises a step of transforming the obtained at least one of left eye-gaze direction data or right eye-gaze direction data into the head coordinate system.

In the step of obtaining, the head pose data and at least one of the left eye-gaze direction data or the right eye-gaze direction data may be obtained in an advantageous embodiment. The probability map is then calculated as an accumulated probability map based on the obtained head pose data and the at least one of the transformed left eye-gaze direction data or transformed right eye-gaze direction data. The area-of-interest is then determined based on the accumulated probability map in the step of determining the area-of-interest.The method for determining an area-of-interest of a person of an advantageous embodiment can improve the accuracy of area-of-interest determination from noisy and erroneous measurements of eye-tracking data. The method achieves this by integrating a head-eye-coordination concept into the process of determining the area-of-interest. The head-eye coordination concept stipulates that the head follows the gaze and that there exists an inherent impulse to a person to bring the head direction (head orientation) in parallel with the gaze direction.

The method in an advantageous embodiment generates a spatial fusion of head pose and eye-gaze into the area-of-interest determination processing. Contrary to the state of the art of area-of-interest processing, the method may combine the use of eye-gaze with the use of head pose. This offers the additional advantage of taking into regard peripheral vision capabilities for determining the area-of-interest. The method can accordingly also take individual peripheral vision capabilities for determining the area-of-interest into regard, which may differ for different persons. Thus, the method offers an improved capability to adapt the area-of-interest determination to the individual capabilities of different persons, for example, persons, which differ in age. The peripheral vision of a person often varies depending on the age of the person.

The calculated probability map and accumulated probability map may each comprise a plurality of probability density values.

The claimed data structure enables to integrate discrete probability density values over discretized spatial maps providing the framework for an efficient accumulation of left eye-gaze direction data for a left eye of the person, right eye-gaze direction data for a right eye of the person, and head pose data, as well as a computationally efficient calculation of probabilities for the person's attention towards predetermined spatial segments in the environment.

The method may determine a map size and a map resolution of each of the generated probability map and accumulated probability map based on available computational resources.

Executing the method may therefore not only adapt to the processing capabilities provided by an assistance system enhanced by the inventive area-of-interest estimation, but also be suitably scaled in order to comply with requirements concerning processing time and memory capacity.

The left eye-gaze direction data and the right eye-gaze direction data may each comprise a gaze direction data element and an angular gaze width data element. The gaze direction data element comprises origin eye coordinates and gaze direction coordinates and the head pose data comprises a head orientation data element and an eye-only range data element.

The head orientation data element may comprise head position coordinates and head orientation coordinates.

The angular gaze width data element and the eye-only range data element may correspond to an angular precision measure, in particular to a two-dimensional probability density function.

Thus, measurement uncertainties concerning head pose and eye gaze determination and originating in the head-eye tracking system are taken into regard for the subsequent area-of-interest determination processing.

According to an advantageous embodiment, transforming the left eye-gaze direction data and the right eye-gaze direction data into the head coordinate system comprises generating a sphere or a partial sphere around the head of the person, and projecting the obtained left eye-gaze direction data, the right eye-gaze direction data and the head pose data onto the generated sphere or a partial sphere.

The method according a preferred embodiment includes accumulating the accumulated probability map with at least one previous accumulated probability map calculated for a previous point in time.

Then, the spatial fusion of head pose data and eye-gaze tracking data is extended to a fusion in space and time, which enables to analyze the measured eye-gaze direction data and head pose data for fixations, saccades and dwells characterizing the individual visual habits and the particular current situation in the environment from the perspective of the of the assisted person.

In a preferred embodiment, the step of calculating the probability map in the head coordinate system comprises calculating at least a first probability map and a second probability map respectively on the obtained left eye gaze direction data, right gaze direction data and/or head pose data. The step of generating the accumulated probability map comprises accumulating the first probability map and the second probability map to generate the accumulated probability map by multiplying corresponding discrete spatial elements of the first probability map and the second probability map to generate a corresponding spatial element of the accumulated probability map.

Performing the entire processing in the head coordinate system provides processing results concerning the area-of-interest relative to the head coordinate system and therefore directly suitable for output to the person without further coordinate transform.

The method according to an advantageous embodiment includes in the step of determining area-of-interest based on the calculated probability map, generating a first candidate area-of-interest and at least one second candidate area-of-interest in the head coordinate system as the candidate areas-of-interest. The step of determining area-of-interest then proceeds by calculating for the first candidate area-of-interest and the at least one second candidate area-of-interest a probability value each based on the probability map. Subsequently, selecting from the first candidate area-of-interest and the at least one second area-of-interest an area with the largest calculated probability value as the determined area-of-interest is performed.

A computer program according to the second aspect addresses the problem, the computer program including program-code means for executing the steps according to any of the embodiments of the first aspect, when the program is executed on a computer or digital signal processor.

Implementing the method in software executed on a computer provides for a flexible processing, which can be adapted to the capabilities of the processing assembly, for example by adapting the size and resolution of the probability maps computed when executing the method. The method may be performed on a single computer or on a distributed computing system using a computer network.

A system for determining an area-of-interest of a person from a spatial direction of gaze of the person based on measured data including at least one of head pose or eye gaze direction data according to a third aspect addresses the problem in a corresponding manner. The system comprises a data acquisition means for obtaining from at least one sensor at least one of left eye-gaze direction data for a left eye of the person and right eye-gaze direction data for a right eye of the person, and for obtaining head pose data including a head pose direction of the person, and for transforming the obtained at least one of left eye gaze direction data or right eye gaze direction data into the head coordinate system. The system further comprises a processor assembly configured to calculate a spatial probability map including probability density values in the head coordinate system based on the obtained at least one of the left eye-gaze direction data and right eye-gaze direction data, and obtained head pose data. The processor assembly is configured to calculate the probability map as an accumulated probability map based on the obtained head pose data and the transformed left eye gaze direction data and/or transformed right gaze direction data The head coordinate system is generated by a sphere or partial sphere around the head of the person as center. The probability density values of the spatial probability map define a spatial probability distribution of at least one of the left eye gaze direction and the right eye gaze direction, and the head pose direction. The processor assembly is configured to determine the area-of-interest by generating at least one candidate area-of-interest defined by a polygon with a plurality of corner points in the head coordinate system based on the calculated probability map. The processor assembly is configured to calculate for the at least one candidate area-of-interest a probability value, by integrating the probability density values of the probability map respectively over the at least one candidate area-of-interest, and by selecting the at least one candidate area-of-interest as the determined area-of-interest in case the calculated probability value is equal to or exceeds a threshold. The area-of-interest is determined based on the accumulated probability map, An interface of the system is configured to output the determined area-of-interest to an assistance system, in particular a driver assistance system, an ambient living assistance system or a collaborative autonomous system for supporting the in performing a task.

The system is independent of the actual implementation of the eye-tracking system. The eye-tracking system provides the measured left and right eye-gaze data and head pose data. The eye-tracking system may comprise a wearable, head mounted eye-tracker, for example in the form of glasses worn on the head of the person, or the eye-tracking system uses an external sensor such as at least one camera monitoring the person from a remote location.

The different method steps of the method, the structure of the system, and the various advantages of applying the method and using the system will become apparent from a discussion of the embodiments, in which

Fig. 1    provides an overview over processing steps of the method according to an embodiment,

Fig. 2    shows a flowchart for performing the method according to an embodiment,

Fig. 3    shows a flowchart with steps for generating the accumulated probability map according to an embodiment,

Fig. 4    shows a flowchart with steps for determining the area-of-interest according to an embodiment,

Fig. 5    shows a block diagram depicting main structural elements of the system according to an embodiment,

Fig. 6    illustrates steps of generating the accumulated probability map according to an embodiment, and

Fig. 7    illustrates steps of determining an area-of-interest according to an embodiment

In the figures denote same reference signs same or corresponding elements. The discussion of the figures omits discussing same reference signs in different figures where it is considered possible without adversely affecting comprehensibility.

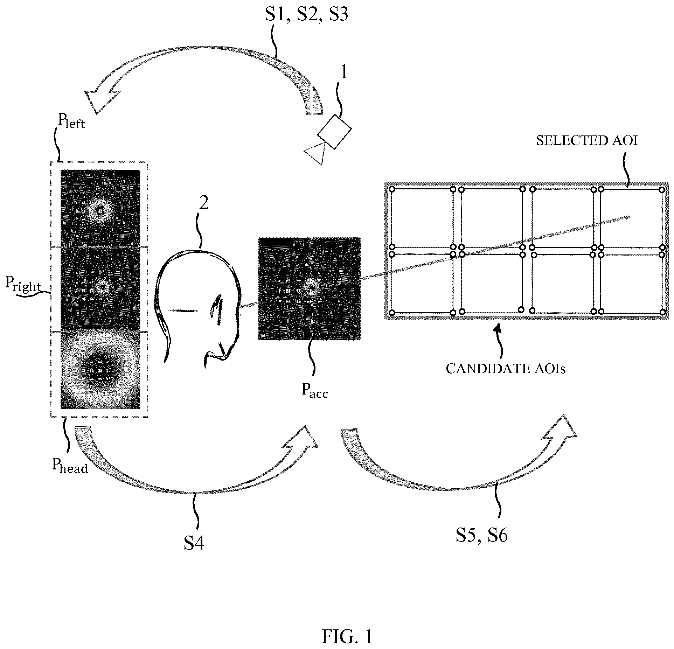

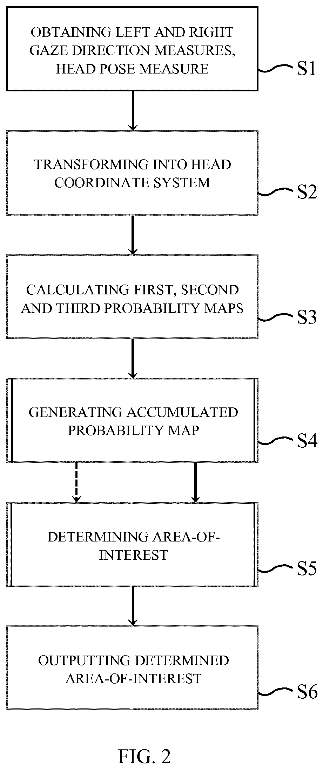

Fig. 1 provides an overview over the processing sequence of the method according to an embodiment. The flowcharts in figs. 2, 3 and 4 show the individual steps S1 to S6 for implementing the method and the discussion of figs. 2, 3 and 4 provides further detail of the embodiment.

The inventive method relies on eye gaze data and head pose data provided by a head-eye tracking system (HET system). HET systems in general are known in the art and use visual measurements on a person 2 for determining a gaze direction of the person 2 and a head pose of the person 2.

A sensor device obtains the measurements of the gaze direction and head pose. In case of vision based HET systems, the sensor includes at least one camera 1. The inventive method may equally use the camera 1 being mounted remote, e.g. detached from the person 2, or, alternatively or additionally the camera 1 is worn by the person 2, for example integrated with a pair of glasses worn on the person's head.

The inventive processing, preferably, determines three probability maps: a first probability map $P_{left}$ $(g_l, \sigma_l)$ defining a spatial probability distribution of the left eye-gaze, a second probability map $P_{right}$ $(g_r, \sigma_r)$ defining a spatial probability distribution of the right eye-gaze and a third probability map $P_{head}$ $(g_h, \sigma_h)$ defining a spatial probability distribution of the head pose. Alternatively, it is also possible that only one of the above-mentioned spatial probability distributions is used. For reasons of simplicity, the following description refers to determining all three of the probability distributions and their common processing. It is obvious, that the details that are explained with respect to the combined spatial probability distributions may equally be applied to only a single probability distribution or a combination of two spatial probability distributions.

After determining the spatial probability distributions, an accumulated probability distribution map $P_{acc}$ $(g)$ is calculated based on the first probability distribution map $P_{left}$ $(g_l, \sigma_l,)$, the second probability distribution map $P_{right}$ $(g_r, \sigma_r)$ and third probability distribution map $P_{lhead}$ $(g_h, \sigma_h)$. Alternatively, the method determines the accumulated probability distribution map $P_{acc}$ $(g)$ based on two of the first probability distribution map $P_{left}$ $(g_l, \sigma_l,)$, the second probability distribution map $P_{right}$ $(g_r, \sigma_r)$ and third probability distribution map $P_{lhead}$ $(g_h, \sigma_h)$.

In case the method determines only one probability distribution map, the accumulated probability distribution map $P_{acc}$ $(g)$ corresponds to the prospective probability distribution map $P(g)$.

The probability distribution maps represent the spatial direction, into which the person 2 directs its visual attention at the time of measuring the data forming the basis of the calculation. The calculated probability maps (probability distribution maps; first, second, third probability maps) accordingly may enable to determine, what the person 2 might have perceived inside its field-of-view (FOV). The probability distribution maps represent also the spatial distribution of the visual attention of the person 2 over its field-of-view.

The accumulated probability map $P_{acc}$ $(g)$ provides the basis for evaluating the field-of-view FOV of the person 2 with respect to its focused visual attention.

The accumulated probability distribution map $P_{acc}$ $(g)$ is used to calculate for at least one candidate area-of-interest a respective probability value that the person 2 directs his/her view towards this/her particular candidate area-of-interest. In case a plurality of candidate areas-of-interest is evaluated with respect to their respective probability values, a most likely candidate area-of-interest may be selected as the determined area-of-interest of the person 2, which is derived from the measured data including the measurements of the gaze direction and head pose.

A candidate area-of-interest is selected as the determined area-of-interest, when the probability value calculated for the candidate area-of-interest is equal to a predetermined threshold value or exceeds the predetermined threshold value. This ensures that only a determined area-of-interest is output that indeed is in the focus of attention of the person 2 up to a sufficient degree.

Alternative embodiments may select the determined area-of-interest according to other or further criteria.

The at least one candidate area-of-interest is selected as the determined area-of-interest, when the calculated probability value is equal to a threshold or exceeds the threshold.

In a particular case, this enables to determine, whether the person looks at the specific candidate area-of-interest or anywhere outside of the candidate area-of-interest.

Alternatively, the at least one candidate area-of-interest is selected as the determined area-of-interest in case the calculated probability value is equal to or exceeds a dynamically determined threshold value.

Further, the at least one candidate area-of-interest is selected as the determined area-of-interest in case the calculated probability value is equal to or exceeds a relative threshold value. This may enable to determine, whether the person looks at the specific candidate area-of-interest or anywhere outside of the area-of-interest, for example, by judging to what degree the person divides its visual attention between the candidate-area-of-interest on the one hand, and the area outside the candidate-area-of-interest on the other hand. For example, a candidate area-of-interest from plural candidate areas-of-interest may be selected, which has the highest calculated probability value of the plurality of candidate areas-of-interest. This enables to determine, towards which candidate areas-of-interest the person focuses its attention. The selected area-of-interest may be the best hypothesis (candidate area-of-interest).Fig. 2 shows a flowchart for performing the method according to an embodiment in more detail concerning the individual processing steps.

**In** a first step S1, the system for determining an area-of-interest of a person 2 obtains input data from a head-eye-tracking system 22. The obtained input data comprises left eye-gaze direction data for a left eye of the person 2 and right eye-gaze direction data for a right eye of the person. The input data further comprises head pose data for a head of the person 2.

The input data includes measured values (measurement quantities)

$$\{(g_l, \sigma_l), (g_r, \sigma_r), (g_h, \sigma_h)\} \qquad (1)$$

The three measured quantities in expression (1) comprise left eye-gaze direction data

$$(g_l, \sigma_l) \qquad (2)$$

for a left eye of the person and right eye-gaze direction data in (1) for a right eye of the person 2

$$(g_r, \sigma_r). \qquad (3)$$

The left eye-gaze direction data and the right eye-gaze direction data each comprise gaze direction elements $g_l$, $g_r$ and angular gaze width elements $\sigma_l$, $\sigma_r$. The gaze direction element $g_l$ of the left eye describes the direction of left eye-gaze by the origin coordinates of the left eye $o_{lx}$, $o_{ly}$, $o_{lz}$ and left gaze direction coordinates $d_{lx}$, $d_{ly}$, $d_{lz}$

$$g_l = (o_{lx}, o_{ly}, o_{lz}, d_{lx}, d_{ly}, d_{ly}); \qquad (4)$$

and the angular precision $\sigma_l$ of the left eye-gaze. The angular precision $\sigma_l$ of the measured left eye gaze depends, as well as the angular precision $\sigma_r$ of the right eye-gaze on the measurement precision, for example, of the head eye tracking system employed for measuring the input values.

The angular precision $\sigma_r$ of the right eye-gaze, as well as the angular precision $\sigma_l$ of the left-eye gaze correspond to a visual beamwidth of the right eye-gaze and the left eye-gaze respectively.

The corresponding gaze direction element $g_r$ of the right eye describes the direction of right eye-gaze by the origin coordinates of the right eye $o_{rx}$, $o_{ry}$, $o_{rz}$ and right gaze direction coordinates $d_{rx}$, $d_{ry}$, $d_{rz}$

$$g_r = (o_{rx}, o_{ry}, o_{rz}, d_{rx}, d_{ry}, d_{ry}) \qquad (5)$$

and the angular precision $\sigma_r$ of the right eye-gaze. The head pose data for a head of the person in expression (1),

$$(g_h, \sigma_h), \qquad (6)$$

comprises a spatial position (head location) of the head of the person 2 and a spatial orientation of the head. The angular width element $\sigma_h$ in (4) represents an individual eye-only-range EOR, which is characteristic for each individual person 2. Viewing an object within the eye-only range will not require a rotation of the head by the person towards the direction of the object.

The angular width element or angular head pose precision $\sigma_h$ may be interpreted as denoting a beamwidth of the head pose. A characteristic value for the angular width element $\sigma_h$ (EOR) is

$$\sigma_h = 30°; \qquad (7)$$

The value for the angular head pose precision $\sigma_h$ may vary in a range between 30° and 40°. The angular head pose precision $\sigma_h$ may be preset, for example to 35° in the system or be selectable according to specific individual characteristics of the person 2, or a group of persons 2 such as children or elderly persons 2.

The head gaze probability density is typically constant and complies with the eye-only range EOR of the person 2. Accordingly, the head pose data for a head of an individual person 2 according to (4) may be expressed by

$$(g_h, \sigma_h = 30°); \qquad (8)$$

The head pose data comprises head orientation elements and an eye-only range element. The head orientation element comprises head position coordinates $o_{hx}$, $o_{hy}$, $o_{hz}$ and head orientation coordinates $d_{hx}$, $d_{hy}$, $d_{hy}$.

$$g_h = (o_{hx}, o_{hy}, o_{hz}, d_{hx}, d_{hy}, d_{hy}); \qquad\qquad (9)$$

The angular gaze width elements $\sigma_l$, $\sigma_r$ and the eye-only range element $\sigma_h$ correspond to an angular precision measure, in particular describe a two-dimensional probability density function, preferably a probability density function of a two-dimensional normal distribution.

In step S2, the method transforms the left eye-gaze direction data ($g_l$, $\sigma_l$) and the right eye-gaze direction data ($g_r$, $\sigma_r$) into a head coordinate system.

The head coordinate system is a coordinate system that uses a number of coordinates to determine unambiguously a location (spatial position) of points or other geometric elements with respect to a spatial position of the head of the person 2. In particular, the head coordinate system is a coordinate system that uses a number of coordinates to determine unambiguously a location of each area-of-interest and each candidate area-of-interest with respect to the spatial head position and head orientation. Preferably, the head may contain an origin (reference point) of the head coordinate system.

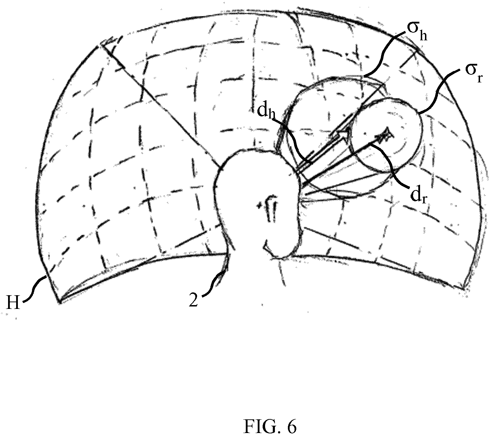

Transforming the left eye-gaze direction data ($g_l$, $\sigma_l$) and the right eye-gaze direction data ($g_r$, $\sigma_r$) comprises a number of sub steps, which are further illustrated by fig. 6 and discussed with reference to fig. 6.

Transforming the left eye-gaze direction measure ($g_l$, $\sigma_l$) and the right eye-gaze direction measure ($g_r$, $\sigma_r$) includes spanning a sphere H, or preferably partial hemisphere H around the head position.

The sphere H is a perfectly round (ball) geometrical plane in three-dimensional space that is a three-dimensional surface formed by a set of points in the three-dimensional space, each point on the surface having an equal distance from the center of the sphere. The center of the sphere corresponds to the point of reference of the head coordinate system.

For present application, a hemisphere H could suffice and reduce the requirements concerning memory.

The method then projects the angular gaze width elements $\sigma_l$, $\sigma_r$ corresponding to angular precision described by density functions into this sphere. A center point of the angular gaze width elements $\sigma_l$, $\sigma_r$ projected onto the sphere H is determined by the gaze direction element $g_r$ of the right eye-gaze and the gaze direction element $g_l$ of the left eye-gaze respectively.

The angular gaze width elements $\sigma_l$, $\sigma_r$ of the left eye-gaze and the right eye-gaze respectively determine the extension of the left eye-gaze and the right eye-gaze on the (partial) sphere H.

In step S3 succeeding to step S2, the system calculates a first probability map, a second probability map and a third probability map.

In particular, the system calculates as the first probability map a left eye-gaze probability map $P_{left}$ ($g_l$, $\sigma_l$) based on the left eye-gaze direction data ($g_l$, $\sigma_l$) transformed into the head coordinate system.

The system further calculates as the second probability map a right eye-gaze probability map $P_{right}$ ($g_l$, $\sigma_l$) based on the right eye-gaze direction data ($g_r$, $\sigma_r$) transformed into the head coordinate system.

The system further calculates as the third probability map a head pose probability map $P_{head}$ ($g_h$, $h$) based on the obtained head pose data ($g_h$, $\sigma_h$), which is obtained in the head coordinate system.

The generated first, second and third probability maps each comprise discretized probability density values. The probability density values are preferably calculated for discrete spatial elements on the sphere H.

The system may determine a map size and a map resolution of each of the generated first, the second and the third probability distribution maps based on computational resources available to the system.

Additionally or alternatively, the map size and the map resolution may be determined taking into regard at least one of the parameters size and resolution of the input data to the system, map size and map resolution of an accumulated probability distribution map to be computed in subsequent step S4.

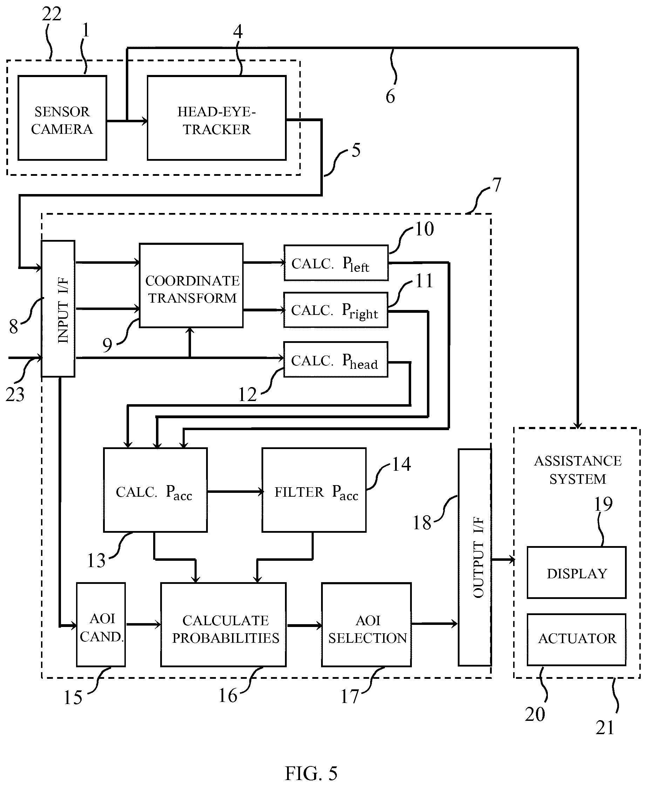

In step S4, the calculated first probability map, second probability map and third probability map are accumulated in order to generate an accumulated probability map $P_{acc}$ with a map size and a map resolution of the area-of-interest and/or candidate areas-of-interest as discussed below with respect to fig. 5.

Accumulating the first, second and third probability map to generate the accumulated probability map $P_{acc}$ may be performed by multiplying the first probability map, the second probability map and the third probability map element-wise, map element per map element, based on corresponding discrete spatial map elements of the first probability map, the second probability map and the third probability map.

Multiplying element-wise the first probability map and the second probability map and the third probability map yields the accumulated probability map $P_{acc}$:

$$P_{acc} = P_{head} * P_{left} * P_{right}; \qquad\qquad (10)$$

Multiplying the first, second and third probability map in order to generate the accumulated probability map $P_{acc}$ takes in account that the left eye-gaze and the right eye-gaze can be assumed to be dependent. Equally, the left eye-gaze and the right eye-gaze can be assumed to be dependent on the head pose.

The accumulated probability map $P_{acc}$ benefits from the combined left eye-gaze data, the right eye-gaze data and head pose data, and describes thereby fused measurement data with a significantly decreased measurement uncertainty when compared to the individual measurements of left eye-gaze, the right eye-gaze and head pose data with their respective measurement uncertainties.

The calculated accumulated probability map $P_{acc}$ is stored in an internal and/or an external memory of the system. Storing the calculated accumulated probability map $P_{acc}$ is preferably performed associated with a time t at which the input data was obtained, in particular the time t corresponds to a time t at which the measured values in the input data were measured, which formed the basis for calculating the accumulated probability map $P_{acc}$.

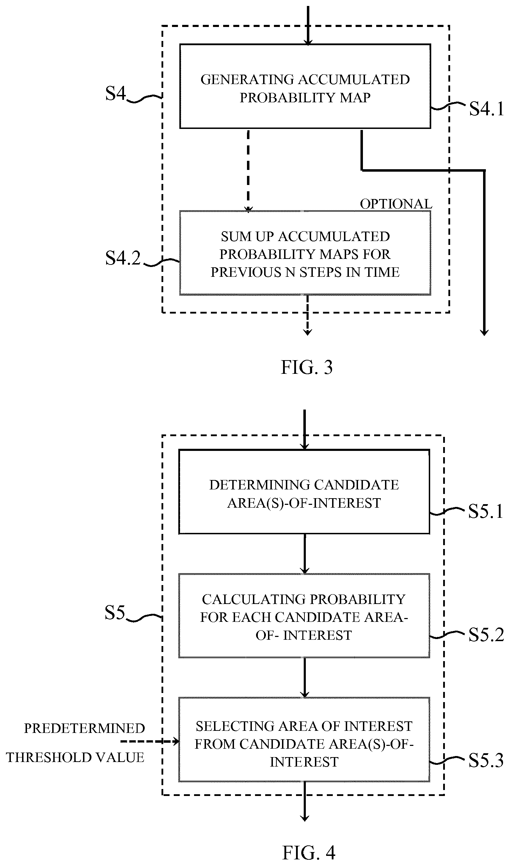

Fig. 3 shows a flowchart with a step S4.1 for generating the accumulated probability map as discussed before and a further optional step S4.2 of filtering the generated accumulated probability map temporally.

In the optional step S4.2 of filtering, the accumulated probability maps $P_{acc}^{t}$ associated with the time t, the accumulated probability maps $P_{acc}^{t-n+a}$ associated with the time (t - n + a), with the integer a=0, 1, 2, 3, ... are used as a basis to compute a further probability map $P_{acc,fix}$. The further probability map $P_{acc,fix}$ may be used to determine a fixation, a saccade, a dwell time or similar measures useful for evaluating human gaze behavior with respect to its time aspects. The further probability map $P_{acc,fix}$ may accumulate the last n measurements over time, for example to provide a measure for determining fixations, saccades and/or dwells. In this embodiment, the further probability map $P_{acc,fix}$ is computed by accumulating

$$P_{acc,fix} = P_{acc,}^{t-n+1} + P_{acc,}^{t-n+2} + P_{acc,}^{t-n+3} + P_{acc,}^{t}; \qquad (11)$$

for three previous points in time (t-n+1), (t-n+2) and (t-n+3) in addition to the accumulated probability map $P_{acc}^{t}$ associated with the time t.

Referring to fig. 3 again, in step S5, the system determines the area-of-interest based on the accumulated probability map $P_{acc}$. An exemplary embodiment for processing steps to determine the area-of-interest based on the accumulated probability map computed in step S4 will be discussed with reference to fig. 5 in more detail.

In step S6, the determined area-of-interest is output via an output interface 18 of the system for determining an area-of-interest of a person.

Fig. 4 shows a flowchart with steps for determining the area-of-interest according to an embodiment.

In step S5.1, the system generates a first candidate area-of-interest and at least one second candidate area-of-interest in the head coordinate system. The first candidate area-of-interest and at least one second candidate area-of-interest are all referred to as candidate areas-of-interest.

The inventive approach is not limited to a plurality of candidate areas-of-interest is used. The method according to one embodiment evaluates a single candidate area-of-interest and determines for this candidate area-area-of-interest based on the probability value calculated for this candidate area of interest, if this candidate area-of-interest is to be output as a determined area-of-interest.

The at least one candidate area-of-interest, for example in one particular embodiment, the first candidate area-of-interest and the at least one second candidate area-of-interest each are defined by polygons with a plurality of corner points. The first and second candidate areas-of-interest may have a rectangular, for example, a quadratic shape. The first and second candidate areas-of-interest having a rectangular shape are defined by a plurality of corner points with respective coordinates in the head coordinate system.

The candidate areas-of-interest may be determined by dividing a field-of-view of the person into equal or differently sized portions, each portion of the field-of-view representing one candidate area-of-interest.

Additionally or alternatively, the candidate areas-of-interest may be dynamically generated, for example based on an input received externally, for example, from an advanced driver assistance system. The candidate areas of interest may be generated in a general direction from the person 2, in which an event or a specific object highly relevant for future evolvement of a situation is predicted to be located.

In step S5.2, the system calculates respectively a first probability value for the first candidate area-of-interest and a second probability value for the second candidate area-of-interest respectively based on the accumulated probability map $P_{acc}$. In case of more candidate areas of interest, respective additional probability values are calculated.

Calculating the first probability value and the second probability value based on the accumulated probability map $P_{acc}$ comprises respectively integrating probability density values of the accumulated probability map $P_{acc}$ over the first candidate area-of-interest and over the second candidate area-of-interest, respectively.

Calculating the first probability value and the second probability value may be performed by adding the discretized probability density values of spatial elements of the accumulated probability map $P_{acc}$ of all those spatial elements, which are within the respective candidate area-of-interest:

$$P_{cAOI} = \sum_{g \in cAOI} P_{acc}(g); \tag{12}$$

In expression (12), $P_{cAOI}$ denotes the accumulated probability for the candidate area-of-interest, $P_{acc}(g)$ the accumulated probability map, g the direction from the person 2 in the head coordinate system. The term $g \in cAOI$ thus comprises all discrete directions from the person 2 in the head coordinate system, which are within the respective candidate area-of-interest.

After having calculated the probability values for all candidate areas-of-interest in step S5.2, the system selects from the candidate areas-of-interest the candidate area-of-interest that has the largest calculated probability value as the determined area-of-interest in a step S5.3 succeeding to step S2.

Having selected the area with a highest probability value as the determined area-of-interest, the method proceeds to step S6 of fig. 3 and outputs information defining the determined area-of-interest.

The method according to one embodiment includes, in the step S5.3, comparing the calculated probability value of the at least one candidate area-of-interest to a predetermined threshold value. If the calculated probability value of the at least one candidate area-of-interest is equal to the predetermined threshold value or exceeds the predetermined threshold value, the at least one candidate area-of-interest is confirmed as an area-of-interest of the person 2. If the calculated probability value of the at least one candidate area-of-interest is below the predetermined threshold value, the candidate area of interest is discarded. In this second case, the calculated probability value of the at least one candidate area-of-interest is not confirmed as drawing the person's visual attention to a sufficient degree. Thus, the candidate area-of-interest is not selected as a determined area of-interest, in case the calculated probability value is below the predetermined threshold value. This decision avoids that a result of a subsequent processing in the driver assistance system, for example, bases on a candidate area-of-interest as an actual areainterest of the person 2, which does actually only draw a small portion of the visual attention of the person 2.

The predetermined threshold value may be determined based on a required minimum probability value required for the probability of area-of-interest to be determined and to be output by the method.

The comparison with the predetermined threshold value in step S5.3 may be performed for the calculated probability value of the each of a plurality of candidate areas-of-interest after calculating the probability value step S5.2.

Additionally or alternatively, the comparison with the predetermined threshold value in step S5.3 may be performed for the calculated probability value of the selected candidate area-of-interest.

The exemplary embodiment of fig. 4 is discussed using an example of using the predetermined threshold value for selecting the determined area-of-interest from plural candidate areas of-interest. Other embodiments of the method may use a dynamic or a relative threshold value.

The calculated probability values for each of a plurality of candidate areas-of-interest may be compared with each other and the candidate area-of-interest with the highest calculated probability value may be selected as the determined area-of-interest of the person 2.

Alternatively, in step S5.3, the method may determine, whether the person looks at the candidate area-of-interest or elsewhere outside of the candidate area-of-interest.

Fig. 5 shows a block diagram depicting main structural elements of the system 7 according to an embodiment.

The system 7 for determining an area-of-interest may form part of an assistance system 21 or be configured as a separate system and providing data on areas of interest to the assistance system 21.

The assistance system 21 may be a driver assistance system, which assists the person 2 in driving a vehicle.

Alternatively, the system may be an assistance system for supporting the person 2 in performing a task in a manufacturing environment or in a logistics application.

Alternatively, the system may form part of an autonomous robot configured to collaborate with the person 2 in performing a task, for example, in the manufacturing environment or in the logistics environment. The system 7 provides the autonomous robot with an enhanced capability for worker monitoring.

The assistance system 21 may include a display 19 for providing assistance information to the person 2.

Additionally or alternatively, the assistance system 2 can include at least one actuator 20.

The system 7 for determining an area-of-interest relies on input data provided by a head-eye-tracking device 4. The head-eye-tracking device 4 may form part of a head-eye tracking system 22 that further includes a sensor device. The sensor device may comprise at least one camera 1. The camera 1 provides image data 6 captured of the person 2 in its environment. The camera 1 may also provide image data 6 to the assistance system 21.

The camera 1 may be a part of the assistance system 21. The assistance system 21 may use the image data 6 in order to determine if a risk for a collision between the person 2 and, for example, a robot collaborating with the person 2 occurs and how significant the risk is.

The head-eye-tracking device 4 determines head pose and gaze direction of the person 2. The head-eye-tracking device 4 is preferably a visually sensing head-eye tracking device 4 (vision based).

**EP 3 819 813 B1**

The head-eye tracking system 22 provides data on head pose and gaze direction for the system 7 for determining an area-of-interest. Head pose comprises head position and head orientation. Gaze direction comprises left eye position and left eye-gaze direction, as well as right eye position and right eye-gaze direction.

The system 7 for determining an area-of-interest includes an input interface 8 for obtaining input data, in particular, the data on head pose and gaze direction provided by the head-eye tracking system 22.

The system 7 for determining an area-of-interest includes an output interface 18 for providing output data, in particular including data on a determined area-of-interest for further processing, for example in the assistance system 22.

The system 7 is preferably implemented as a software program running on a processor or signal processor. The processor may be a processor assembly including at least one processor and volatile and non-volatile memory capacity for storing the program and program data generated when executing the program.

In particular, the input interface 8 and the output interface 18 may include hardware elements such as physical connecting means for connecting to a bus, to other units such as the head-eye tracking system 22 and the assistance system 21, such as memory capacity for storing input data and output data. The input interface 8 and the output interface 18 may include software elements as well, such as program modules receiving/transmitting data using specific protocols.

Fig. 5 shows a specific embodiment of the system 7 for determining an area-of-interest comprising a plurality of distinct units (means, modules) for executing the steps of the method for determining an area-of-interest. The units may be implemented at least in part in hardware, but are preferably implemented as software modules running on the processor.

The interfaces between the depicted units are one specific example, but the units may be structured differently in alternate embodiments, but the functions performed by the units constituting the system 7 for determining an area-of-interest remain.

The system 7 for determining an area-of-interest includes a coordinate transform unit 9. The coordinate transform unit 9 obtains gaze direction data consisting of left eye-gaze direction data and right eye-gaze direction data, respectively including left eye position and left eye-gaze direction, as well as right eye position and right eye-gaze direction. The coordinate transform unit 9 performs coordinate transformation of the obtained left eye-gaze direction data into the head coordinate system to generate transformed left eye-gaze direction data. The coordinate transform unit 9 further performs coordinate transformation of the obtained right eye-gaze direction data into the head coordinate system to generate transformed right eye gaze direction data. The coordinate transform unit 9 also receives head pose data in order to perform the coordinate transformation of the left eye-gaze direction data and the right eye-gaze direction data into the head coordinate system.

The system 7 for determining an area-of-interest includes first, second and third probability distribution calculation units 10, 11, 12 and a conditional probability distribution calculation unit 13.

The first probability distribution calculation unit 10 calculates the first probability map for the left eye gaze $P_{left}$ ($d_l$, $\sigma_l$) based on the transformed left eye-gaze direction data, the left eye-gaze probability distribution map $P_{left}$ ($d_l$, $\sigma_l$) being mapped onto a field-of-view (FOV) of the person 2 .

The second probability distribution calculation unit 11 calculates the second distribution map for the right eye-gaze $P_{right}$ ($d_r$, $\sigma_r$) based on the transformed right eye-gaze direction data, the right eye-gaze probability map $P_{left}$ ($d_l$, $\sigma_l$) being mapped onto the field-of-view (FOV) of the person 2.

The third probability distribution calculation unit 12 calculates the third probability map for the head pose $P_{head}$ ($d_h$, $\sigma_h$) based on the head pose direction data.

The conditional probability distribution calculation unit 13 obtains the first, second and third probability maps, in particular the left eye-gaze probability distribution map $P_{left}$ ($d_l$, $\sigma_l$), the right eye-gaze probability distribution map $P_{left}$ ($d_l$, $\sigma_l$) and the head pose distribution map $P_{head}$ ($d_h$, $\sigma_h$) and computes the accumulated probability map $P_{acc}$ (g), preferably by calculating the conditional probabilities on an element-per-element basis for the spatial elements of the left eye-gaze probability distribution map $P_{left}$ ($d_l$, $\sigma_l$), the right eye-gaze probability distribution map $P_{left}$ ($d_l$, $\sigma_l$) and the head pose distribution map $P_{head}$ ($d_h$, $\sigma_h$).

The accumulated probability map $P_{acc}$ (g) is stored in a memory associated with a time stamp including point in time for acquiring the measured data on head pose and gaze direction provided by the head-eye-tracking system 22, which were used for calculating accumulated probability map $P_{acc}$.

The process of calculating the accumulated probability map $P_{acc}$ may be repeatedly performed on a time sequence of data on head pose and gaze direction provided by the head-eye-tracking system 22, for example. The memory then stores a time sequence of accumulated probability maps $P_{acc,}^{t-n+1}$ $P_{acc,}^{t-n+3}$, ... , $P_{acc}^{t}$, with a time interval $\Delta t$ between each of the measurements accumulated probability maps $P_{acc,}^{t}$.

The time periods $\Delta t$ may be selected based on capabilities of the head-eye-tracking system 22, the processing and memory capabilities of the system 7 for determining an area-of-interest and requirements of an application, for example, requirements of the assistance system 21 concerning determined areas-of-interest.

The optional filter unit 14 of the system 7 obtains a time sequence of accumulated probability maps,

$P_{acc,}^{t-n+1}$ $P_{acc,}^{t-n+2}$, ..., $P_{acc,}^{t}$ and calculates the further probability map $P_{acc,\ fix}$ according to equation (12).

The further probability map $P_{acc,fix}$ may be used to determine a fixation, a saccade, a dwell time or similar measures useful for evaluating human gaze behavior. For example, the further probability distribution map $P_{acc,\ fix}$ may accumulate n probability maps $P_{acc,}^{t}$ calculated at time intervals $\Delta t$ in order to filter over n measurements over a time of n $\Delta t$. The further probability distribution map $P_{acc,fix}$ provides, for example, a measure for determining fixations, saccades and/or dwell times in a gaze behavior of the person 2.

The system 7 for determining an area-of-interest includes a candidate area-of-interest determination unit 15, a probability calculation unit 16 and an area-of-interest determination unit 17.

The candidate area-of-interest determination unit 15 determines a plurality of possible areas-of-interest for further consideration and evaluation in the probability calculation unit 16 and the area-of-interest determination unit 17.

The candidate area-of-interest determination unit 15 performs in particular the function of mapping the candidate areas-of-interest to field-of-view, in a particular, to the head coordinate system, and provides the mapped candidate areas-of-interest to the probability calculation unit 16.

Each candidate area-of-interest can be a polygon comprising a plurality of corner points, wherein the candidate area-of-interest determination unit 15 projects the plurality corner points into the head coordinate system.

The candidate area-of-interest determination unit 15 may determine the candidate areas-of-interest based on the head gaze data obtained from the input interface 8.

The input interface 8 may also obtain an external control signal 23, which includes control data for determining the candidate areas-of-interest for further evaluation by the system 7. The control signal 23 of an embodiment may include the control data for determining the candidate areas-of-interest provided by the assistance system 21. The control data may specify a specific portion of the environment of the person 2 for evaluating if an area-of-interest may be detected or an assumed area-of-interest could be confirmed in that portion of the environment.

The control data may define the layout of the area-of-interest, for example its shape and/or its size.

The candidate areas-of-interest may be determined by dividing the field-of-view FOV into a plurality of equal candidate areas-of-interest, for example, of rectangular or quadratic shapes.

Additionally or alternatively, the control signal 23 may include control data provided by the assistance system 21 for setting the predetermined threshold value for selecting the determined area-of-interest based on the calculated probability value(s).

The probability calculation unit 16 uses the accumulated probability map $P_{acc}$ and/or the further probability map $P_{acc,\ fix}$ for calculating for each candidate area-of-interest a corresponding probability value. The calculated probability value for a candidate area-of-interest yields a probability of the person 2 looking at this particular candidate area-of-interest.

The probability calculation unit 16 may calculate the probability value by calculating a two-dimensional surface integral of the accumulated probability map $P_{acc}$ over the candidate area-of-interest.

In particular, the probability calculation unit 16 may add the discrete probability density values of the discretized accumulated probability map $P_{acc}$ over the probability value to generate the probability value of the candidate area-of-interest.

The area-of-interest determination unit 17 uses the calculated probability values of the candidate areas-of-interest provided by the probability calculation unit 16 for determining at least one area-of-interest from the candidate areas-of-interest for output as the determined area-of-interest.

The area-of-interest determination unit 17 may compare the calculated probability values of the candidate areas-of-interest and select the candidate area-of-interest with the highest probability value for output as the determined area-of-interest. Alternatively, areas-of-interest for which the calculated probability values exceed a pre-set threshold may be selected as determined areas-of-interest in case a difference between calculated probability values is below a certain threshold so that no clear distinction can be made, which of the determined areas-of-interest attracts more attention by the person 2.

The area-of-interest determination unit 17 provides the determined area-of-interest to the output interface 18. The output interface 18 generates an output signal including data defining the at least one determined area-of-interest. The output signal may also include data on the probability value of the at least one determined area-of-interest for further evaluation by the assistance system 21.

Fig. 6 illustrates steps of generating the accumulated probability map $P_{acc,}$ and, in particular, the transformed eye-gaze data and the head pose data according to an embodiment.

Transforming the obtained eye-gaze data into the head coordinate system can be performed by spanning a sphere (curved plane) H around a head of the person 2. The sphere H may represent a fraction (portion) of a sphere or a hemisphere around the head. The angular distribution elements (probability density functions) $\sigma_l$, $\sigma_r$, $\sigma_h$ of the eye-gaze data of the left eye, of the right eye and of the head pose data are then projected into the sphere H. In fig. 6, the angular distribution element $\sigma_r$ of the right eye gaze is depicted projected to the sphere H in the head coordinate system. The center of the angular distribution element $\sigma_r$ of the right eye gaze corresponds to the right eye gaze direction element $d_r$.

The angular distribution element $\sigma_h$ of the head pose is depicted projected to the sphere H in the head coordinate system. The center of the angular distribution element $\sigma_h$ of the head pose corresponds to the head pose direction element $d_h$. The embodiment illustrated by fig. 6 omits using the left eye-gaze for calculating the accumulated probability distribution $P_{acc}$. This particular embodiment shows the flexibility of the inventive approach, which calculates the probability map from at least one of the measured left eye-gaze, right eye-gaze and head pose and is not limited to an embodiment calculating the accumulated probability distribution map $P_{acc}$ by accumulating first, second and third probability distribution maps $P_{left}$, $P_{right}$ and $P_{head}$.

This flexibility enables to adapt the inventive method to situations, in which only head pose and either left or right eye-gaze are available, for example due to limitations of the measurements, or characteristics of the person 2.

This flexibility enables to adapt the inventive method to take into regard available processing and memory resources and to adapt to different requirements concerning processing time and admissible uncertainties in determining the area-of-interest from the accumulated probability distribution map $P_{acc}$.

A center point of the two-dimensional probability distribution $P_{left}$ on the sphere H depends on the direction distribution element $d_l$. A width of the two-dimensional probability distribution $P_{left}$ on the curved plane depends on the angular distribution element (probability density function) $\sigma_l$.

A center point of the two-dimensional probability distribution $P_{right}$ on the sphere H depends on the direction distribution element $d_r$. A width of the two-dimensional probability distribution $P_{right}$ on the sphere H depends on the angular distribution element (probability density function) $\sigma_r$.

The width of the two-dimensional probability distribution $P_h$ on the sphere H depends on the angular distribution element (probability density function) $\sigma_h$. The angular distribution element $\sigma_h$ defines the width of the sphere H and determines the field-of-view FOV of the person on the sphere H.

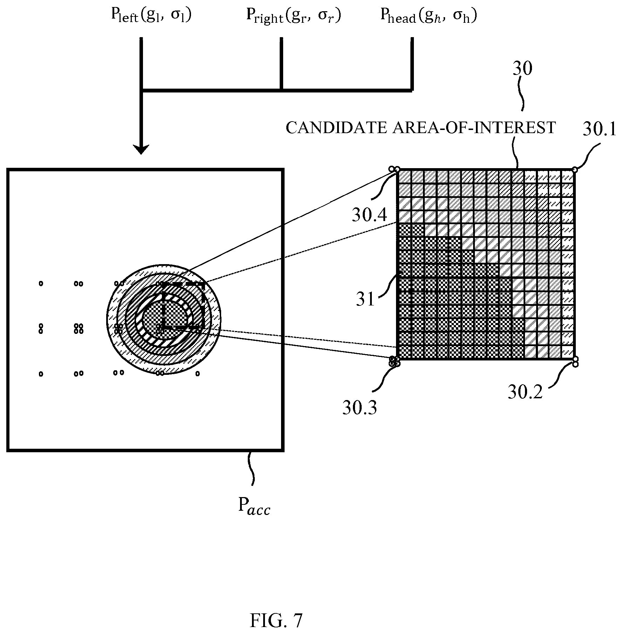

Fig. 7 illustrates the processing steps for calculating a probability value for a candidate area-of-interest 30 according to an embodiment. Four corner points 30.1, 30.2., 30.3, 30.4 define a candidate area-of-interest 30 of a quadratic shape.

The accumulated probability distribution map $P_{acc}$ is a discrete accumulated probability distribution map $P_{acc}$ that includes for each spatial map element 31 a corresponding accumulated probability density value calculated by accumulating in particular multiplying, the corresponding probability distribution values of each of the first probability distribution map $P_{left}$ ($g_r$, $\sigma_r$), the second probability distribution map $P_{right}$ ($g_r$, $\sigma_r$) and the third probability distribution map $P_{head}$ ($g_h$, $\sigma_h$).

The probability density values may be discrete values.

Calculating the probability value for the candidate area-of-interest 30 corresponds to summarizing all discrete probability density values for each of the discrete map elements 31 of the accumulated probability distribution map $P_{acc}$, which are within boundaries of the candidate area-of-interest 30.

Calculating the probability value for the candidate area-of-interest 30 according to the inventive method requires accordingly only few computation resources. The method is therefore suited to determine areas-of-interest with a high resolution, or to comply with requirements of short processing time, or is suited for implementation on systems with limited processing and memory resources.

**Claims**

1. Method for determining an area-of-interest of a person (2) from a spatial direction of gaze of the person based on measured data including at least one of head pose or eye gaze direction data, the method comprising steps of

   obtaining (S1), from at least one sensor, at least one of left eye gaze direction data for a left eye of the person (2), right eye gaze direction data for a right eye of the person (2) and obtaining head pose data including a head pose direction of the person (2), and
   the obtained at least one of left eye gaze direction data or right eye gaze direction data is transformed into the head coordinate system, and calculating (S3) a spatial probability map including probability density values in a head coordinate system from the obtained at least one of left eye gaze direction data and right gaze direction data and, the head pose data, and the probability map is calculated as an accumulated probability map (S4, S4.1) based on the obtained head pose data and the transformed left eye gaze direction data and/or transformed right gaze direction data,
   wherein the head coordinate system is generated by a sphere or partial sphere around the head of the person as center, and
   wherein the probability density values of the spatial probability map define a spatial probability distribution of at least one of the left eye gaze direction, the right eye gaze direction and the head pose direction,

determining (S5) an area-of-interest based on the calculated probability map by generating (S5.1) at least one candidate area-of-interest defined by a polygon with a plurality of corner points in the head coordinate system, wherein the area-of-interest is determined based on the accumulated probability map,

calculating (S5.2) for the at least one candidate area-of-interest a probability value by integrating the probability density values of the probability map respectively over the at least one candidate area-of-interest, and by selecting (S5.3) the at least one candidate area-of-interest as the determined area-of-interest in case the calculated probability value is equal to or exceeds a threshold, and

outputting (S6) the determined area-of-interest to an assistance system, in particular a driver assistance system, an ambient living assistance system or a collaborative autonomous system for supporting the person (2) in performing a task.

2. Method according to claim 1, wherein

   generating (S5.1) the at least one candidate area-of-interest includes
   transforming a predetermined candidate area-of-interest into the head coordinate system.

3. Method according to any one of the preceding claims, wherein
   the calculated probability map and the accumulated probability map each comprise a plurality of probability density values.

4. Method according to any one of the preceding claims, wherein
   determining a map size and a map resolution of the calculated probability map and accumulated probability map is based on available computational resources.

5. Method according to any of the preceding claims, wherein

   the left eye gaze direction data and the right eye gaze direction data each comprise a gaze direction data element and an angular gaze width data element,
   the gaze direction data element comprises origin eye coordinates and gaze direction coordinates, and
   the head pose data comprises a head orientation data element and an eye-only range data element.

6. Method according to claim 5, wherein
   the head orientation data element comprises head position coordinates and head orientation coordinates.

7. Method according to one of claims 5 or 6, wherein
   the angular gaze width data element and the eye-only range data element correspond to an angular precision measure, in particular to a two-dimensional probability density function.

8. Method according to any of the preceding claims, wherein

   transforming (S2) the left eye gaze direction data and the right eye gaze direction data into the head coordinate system includes
   generating a sphere or a partial sphere (H) around the head of the person (2), and
   projecting the obtained left eye gaze direction data, the right eye gaze direction data and the head pose data onto the generated sphere or a partial sphere (H).

9. Method according to any of claims 3 to 8, wherein
   generating (S4, S4.1) the accumulated probability map further comprises accumulating (S4.2) the accumulated probability map with at least one previously accumulated probability map calculated for a previous point in time.

10. Method according to any of claims 3 to 9, wherein

    calculating (S3) the probability map in the head coordinate system comprises calculating at least a first probability map and a second probability map respectively based on the obtained left eye gaze direction data, right gaze direction data and/or head pose data,
    generating (S4, S4.1) the accumulated probability map includes accumulating the first probability map and the second probability map to generate the accumulated probability map by multiplying corresponding discrete spatial elements of the first probability map and the second probability map to generate a corresponding spatial element of the accumulated probability map.

**11.** Method according to any of the preceding claims, wherein
in the step of determining (S5) an area-of-interest based on the calculated probability map, generating (S5.1) a first candidate area-of-interest and at least one second candidate area-of-interest in the head coordinate system, calculating (S5.2) for the first candidate area-of-interest and the at least one second candidate area-of-interest a probability value each based on the probability map, and by selecting (S5.3) from the first candidate area-of-interest and the at least one second area-of-interest an area with the largest calculated probability value as the determined area-of-interest.

**12.** A computer program with program-code means for executing the steps according to any one of the preceding claims when the program is executed on a computer or digital signal processor.

**13.** System for determining an area-of-interest of a person (2) from a spatial direction of gaze of the person based on measured data including at least one of head pose or eye gaze direction data, the system comprising

a data acquisition means (8) for obtaining from at least one sensor, at least one of left eye gaze direction data for a left eye of the person (2)and right eye gaze direction data for a right eye of the person (2), and obtaining head pose data including a head pose direction of the person (2), and
for transforming the obtained at least one of left eye gaze direction data or right eye gaze direction data into the head coordinate system;
a processor assembly configured to calculate a spatial probability map including probability density values in the head coordinate system based on the obtained at least one of the left eye gaze direction data and the right eye gaze direction data, and the head pose data, to calculate the probability map as an accumulated probability map based on the obtained head pose data and the transformed left eye gaze direction data and/or transformed right gaze direction data,
wherein the head coordinate system is generated by a sphere or partial sphere around the head of the person as center. and
wherein the probability density values of the spatial probability map define a spatial probability distribution of at least one of the left eye gaze direction, the right eye gaze direction and the head pose direction, and
the processor assembly is further configured to determine the area-of-interest by generating (S5.1) at least one candidate area-of-interest defined by a polygon with a plurality of corner points in the head coordinate system based on the calculated probability map; calculating (S5.2) for the at least one candidate area-of-interest a probability value, wherein the area-of-interest is determined based on the accumulated probability map, by integrating the probability density values of the probability map respectively over the at least one candidate area-of-interest, and by
selecting (S5.3) the at least one candidate area-of-interest as the determined area-of-interest in case the calculated probability value is equal to or exceeds a threshold, and
an interface (18) to output the determined area-of-interest to an assistance system, in particular a driver assistance system, an ambient living assistance system or a collaborative autonomous system for supporting the person (2) in performing a task.

## Patentansprüche

**1.** Verfahren zum Bestimmen eines interessierenden Bereichs einer Person (2) aus einer räumlichen Blickrichtung der Person, basierend auf gemessenen Daten, die Kopfhaltung und/oder Blickrichtungsdaten des Auges beinhalten, wobei das Verfahren die folgenden Schritte umfasst

Erhalten (S1), von mindestens einem Sensor, von mindestens einem von Linksaugenblickrichtungsdaten für ein linkes Auge der Person (2), Rechtsaugenblickrichtungsdaten für ein rechtes Auge der Person (2) und Erhalten von Kopfhaltungsdaten einschließlich einer Kopfhaltungsrichtung der Person (2), und
die erhaltenen Blickrichtungsdaten des linken Auges und/oder Blickrichtungsdaten des rechten Auges werden in das Kopfkoordinatensystem transformiert, und das Berechnen (S3) einer räumlichen Wahrscheinlichkeitskarte einschließlich Wahrscheinlichkeitsdichtewerten in einem Kopfkoordinatensystem aus den erhaltenen Blickrichtungsdaten des linken Auges und/oder Blickrichtungsdaten des rechten Auges und/oder den Kopfhaltungsdaten, und die Wahrscheinlichkeitskarte als eine akkumulierte Wahrscheinlichkeitskarte (S4, S4.1) basierend auf den erhaltenen Kopfhaltungsdaten und den transformierten linken Augen-Blickrichtungsdaten und/oder transformierten rechten Blickrichtungsdaten berechnet werden,
wobei das Kopfkoordinatensystem durch eine Kugel oder Teilkugel um den Kopf der Person als Mittelpunkt erzeugt wird, und
wobei die Wahrscheinlichkeitsdichtewerte der räumlichen Wahrscheinlichkeitskarte eine räumliche Wahrscheinlichkeitsverteilung der Blickrichtung des linken Auges und/oder der Blickrichtung des rechten Auges und/oder der Kopfhaltungsrichtung definieren,
Bestimmen (S5) eines interessierenden Bereichs basierend auf der berechneten Wahrscheinlichkeitskarte durch Erzeugen (S5.1) mindestens eines interessierenden Kandidatenbereichs, das durch ein Polygon mit mehreren Eckpunkten in dem Kopfkoordinatensystem definiert ist, wobei der interessierende Bereich basierend auf der akkumulierten Wahrscheinlichkeitskarte bestimmt wird, Berechnen (S5.2) eines Wahrscheinlichkeitswerts für den mindestens einen interessierenden Kandidatenbereich durch Integrieren der Wahrscheinlichkeitsdichtewerte der Wahrscheinlichkeitskarte jeweils über den mindestens einen interessierenden Kandidatenbereich und durch Auswählen (S5.3) des mindestens einen interessierenden Kandidatenbereichs als den bestimmten interessierenden Bereich, falls der berechnete Wahrscheinlichkeitswert gleich einem Schwellenwert ist oder diesen überschreitet, und
Ausgeben (S6) des bestimmten interessierenden Bereichs an ein Assistenzsystem, insbesondere ein Fahrerassistenzsystem, ein Umgebungswohnassistenzsystem oder ein kollaboratives autonomes System zum Unterstützen der Person (2) beim Durchführen einer Aufgabe.

2. Verfahren nach Anspruch 1, wobei

   das Erzeugen (S5.1) des mindestens einen interessierenden Kandidatenbereichs Folgendes beinhaltet Transformieren eines vorbestimmten interessierenden Kandidatenbereichs in das Kopfkoordinatensystem.

3. Verfahren nach einem der vorhergehenden Ansprüche, wobei
   die berechnete Wahrscheinlichkeitskarte und die akkumulierte Wahrscheinlichkeitskarte jeweils mehrere Wahrscheinlichkeitsdichtewerte umfassen.

4. Verfahren nach einem der vorhergehenden Ansprüche, wobei
   das Bestimmen einer Kartengröße und einer Kartenauflösung der berechneten Wahrscheinlichkeitskarte und der akkumulierten Wahrscheinlichkeitskarte auf verfügbaren Rechenressourcen basiert.

5. Verfahren nach einem der vorhergehenden Ansprüche, wobei

   die Blickrichtungsdaten des linken Auges und die Blickrichtungsdaten des rechten Auges jeweils ein Blickrichtungsdatenelement und ein Winkelblickbreitendatenelement umfassen,
   das Blickrichtungsdatenelement Ursprungsaugenkoordinaten und Blickrichtungskoordinaten umfasst, und
   die Kopfhaltungsdaten ein Kopforientierungsdatenelement und ein nur-Augen-Bereichsdatenelement umfassen.

6. Verfahren nach Anspruch 5, wobei
   das Kopforientierungsdatenelement Kopfpositionskoordinaten und Kopforientierungskoordinaten umfasst.

7. Verfahren nach einem der Ansprüche 5 oder 6, wobei das Blickwinkelbreiten-Datenelement und das nur-Auge-Entfernungsdatenelement einem Winkelgenauigkeitsmaß entsprechen, insbesondere einer zweidimensionalen Wahrscheinlichkeitsdichtefunktion.

8. Verfahren nach einem der vorhergehenden Ansprüche, wobei

   das Transformieren (S2) der Blickrichtungsdaten des linken Auges und der Blickrichtungsdaten des rechten Auges in das Kopfkoordinatensystem Folgendes beinhaltet Erzeugen einer Kugel oder einer Teilkugel (H) um den Kopf der Person (2), und
   Projizieren der erhaltenen linkes-Auge-Blickrichtungsdaten, der rechten-Auge-Blickrichtungsdaten und der Kopfhaltungsdaten auf die erzeugte Kugel oder eine Teilkugel (H).

9. Verfahren nach einem der Ansprüche 3 bis 8, wobei das Erzeugen (S4, S4.1) der akkumulierten Wahrscheinlichkeitskarte ferner das Akkumulieren (S4.2) der akkumulierten Wahrscheinlichkeitskarte mit mindestens einer früher akkumulierten Wahrscheinlichkeitskarte umfasst, die für einen früheren Zeitpunkt berechnet wurde.

10. Verfahren nach einem der Ansprüche 3 bis 9, wobei das Berechnen (S3) der Wahrscheinlichkeitskarte in dem Kopfkoordinatensystem, das Berechnen mindestens einer ersten Wahrscheinlichkeitskarte und einer zweiten Wahrscheinlichkeitskarte, jeweils basierend auf den erhaltenen linken Augen-Blickrichtungsdaten, rechten Blickrichtungsdaten und/oder Kopfhaltungsdaten umfasst, das Erzeugen (S4, S4.1) der akkumulierten Wahrscheinlichkeitskarte das Akkumulieren der ersten Wahrscheinlichkeitskarte und der zweiten Wahrscheinlichkeitskarte beinhaltet, um die akkumulierte Wahrscheinlichkeitskarte durch Multiplizieren entsprechender diskreter räumlicher Elemente der ersten Wahrscheinlichkeitskarte und der zweiten Wahrscheinlichkeitskarte zu erzeugen, um ein entsprechendes räumliches Element der akkumulierten Wahrscheinlichkeitskarte zu erzeugen.

11. Verfahren nach einem der vorhergehenden Ansprüche, wobei
in dem Schritt des Bestimmens (S5) eines interessierenden Bereichs basierend auf der berechneten Wahrscheinlichkeitskarte, das Erzeugen (S5.1) eines ersten interessierenden Kandidatenbereichs und mindestens eines zweiten interessierenden Kandidatenbereichs in dem Kopfkoordinatensystem, das Berechnen (S5.2) eines Wahrscheinlichkeitswerts für den ersten interessierenden Kandidatenbereich und den mindestens einen zweiten interessierenden Kandidatenbereich jeweils basierend auf der Wahrscheinlichkeitskarte, und durch Auswählen (S5.3) aus dem ersten interessierenden Bereich und dem mindestens einen zweiten interessierenden Bereich eines Bereichs mit dem größten berechneten Wahrscheinlichkeitswert als den bestimmten interessierenden Bereich.

12. Computerprogramm mit Programmcodemitteln zum Ausführen der Schritte nach einem der vorhergehenden Ansprüche, wenn das Programm auf einem Computer oder digitalen Signalprozessor ausgeführt wird.

13. System zum Bestimmen eines interessierenden Bereichs einer Person (2) aus einer räumlichen Blickrichtung der Person, basierend auf gemessenen Daten, die Kopfhaltung und/oder Blickrichtungsdaten des Auges beinhalten, wobei das System Folgendes umfasst

ein Datenerfassungsmittel (8) zum Erhalten von mindestens einem Sensor, von Linksaugenblickrichtungsdaten für ein linkes Auge der Person (2) und/oder von Rechtsaugenblickrichtungsdaten für ein rechtes Auge der Person (2) und Erhalten von Kopfhaltungsdaten einschließlich einer Kopfhaltungsrichtung der Person (2), und
zum Transformieren der erhaltenen Blickrichtungsdaten des linken Auges und/oder Blickrichtungsdaten des rechten Auges in das Kopfkoordinatensystem;
eine Prozessorbaugruppe, die dazu ausgelegt ist, eine räumliche Wahrscheinlichkeitskarte, die Wahrscheinlichkeitsdichtewerte in dem Kopfkoordinatensystem beinhaltet, basierend auf den erhaltenen Blickrichtungsdaten des linken Auges und/oder Blickrichtungsdaten des rechten Auges und den Kopfhaltungsdaten zu berechnen, um die Wahrscheinlichkeitskarte als eine akkumulierte Wahrscheinlichkeitskarte, basierend auf den erhaltenen Kopfhaltungsdaten und den transformierten Blickrichtungsdaten des linken Auges und/oder transformierten Blickrichtungsdaten des rechten Auges zu berechnen,
wobei das Kopfkoordinatensystem durch eine Kugel oder Teilkugel um den Kopf der Person als Mittelpunkt erzeugt wird, und
wobei die Wahrscheinlichkeitsdichtewerte der räumlichen Wahrscheinlichkeitskarte eine räumliche Wahrscheinlichkeitsverteilung der Blickrichtung des linken Auges und/oder der Blickrichtung des rechten Auges und/oder der Kopfhaltungsrichtung definieren, und
die Prozessorbaugruppe ferner dazu ausgelegt ist, den interessierenden Bereich zu bestimmen, indem mindestens ein interessierender Kandidatenbereich erzeugt (S5.1) wird, der durch ein Polygon mit mehreren Eckpunkten in dem Kopfkoordinatensystem basierend auf der berechneten Wahrscheinlichkeitskarte definiert ist;
Berechnen (S5.2) für den mindestens einen interessierenden Kandidatenbereich eines Wahrscheinlichkeitswerts, wobei der interessierende Bereich basierend auf der akkumulierten Wahrscheinlichkeitskarte bestimmt wird, durch
Integrieren der Wahrscheinlichkeitsdichtewerte der Wahrscheinlichkeitskarte jeweils über den mindestens einen Kandidatenbereich von Interesse und durch Auswählen (S5.3) des mindestens einen interessierenden Kandidatenbereichs als den bestimmten interessierenden Bereich, falls der berechnete Wahrscheinlichkeitswert gleich einem Schwellenwert ist oder diesen überschreitet, und
eine Schnittstelle (18), um den bestimmten interessierenden Bereich an ein Assistenzsystem auszugeben, insbesondere ein Fahrerassistenzsystem, ein Umgebungswohnassistenzsystem oder ein kollaboratives autonomes System zum Unterstützen der Person (2) beim Durchführen einer Aufgabe.

**Revendications**

1. Procédé de détermination d'une zone d'intérêt d'une personne (2) à partir d'une direction spatiale du regard de la personne sur la base de données mesurées comportant des données de pose de la tête et/ou de direction du regard oculaire, le procédé comprenant les étapes suivantes

    obtention (S1), à partir d'au moins un capteur, de données de direction du regard pour l'œil gauche concernant l'œil gauche de la personne (2) et/ou de données de direction du regard pour l'œil droit concernant l'œil droit de la personne (2), et obtention de données de pose de la tête comportant une direction de pose de la tête de la personne (2), et
    transformation des données de direction du regard pour l'œil gauche et/ou des données de direction du regard pour l'œil droit obtenues dans le système de coordonnées de la tête, et calcul (S3) d'une carte de probabilité spatiale comportant des valeurs de densité de probabilité dans un système de coordonnées de la tête à partir des données de direction du regard pour l'œil gauche et/ou des données de direction du regard pour l'œil droit obtenues, et des données de pose de la tête, et calcul de la carte de probabilité sous la forme d'une carte de probabilité cumulée (S4, S4.1) sur la base des données de pose de la tête obtenues et des données de direction du regard pour l'œil gauche transformées et/ou des données de direction du regard pour l'œil droit transformées, le système de coordonnées de la tête étant généré par une sphère ou une sphère partielle centrée sur la tête de la personne, et
    les valeurs de densité de probabilité de la carte de probabilité spatiale définissant une distribution de probabilité spatiale de la direction du regard pour l'œil gauche et/ou de la direction du regard pour l'œil droit et/ou de la direction de pose de la tête,
    détermination (S5) d'une zone d'intérêt sur la base de la carte de probabilité calculée par génération (S5.1) d'au moins une zone d'intérêt candidate définie par un polygone comportant une pluralité de points d'angle dans le système de coordonnées de la tête, la zone d'intérêt étant déterminée sur la base de la carte de probabilité cumulée,
    calcul (S5.2), pour l'au moins une zone d'intérêt candidate, d'une valeur de probabilité par intégration des valeurs de densité de probabilité de la carte de probabilité respectivement sur l'au moins une zone d'intérêt candidate, et par
    sélection (S5.3) de l'au moins une zone d'intérêt candidate en tant que zone d'intérêt déterminée dans le cas où la valeur de probabilité calculée est supérieure ou égale à un seuil, et
    fourniture en sortie (S6) de la zone d'intérêt déterminée à un système d'assistance, en particulier un système d'assistance à la conduite, un système d'assistance à l'autonomie à domicile ou un système autonome collaboratif, destiné à aider la personne (2) à réaliser une tâche.

2. Procédé selon la revendication 1, dans lequel

    la génération (S5.1) de l'au moins une zone d'intérêt candidate comporte
    la transformation d'une zone d'intérêt candidate prédéterminée dans le système de coordonnées de la tête.

3. Procédé selon l'une quelconque des revendications précédentes, dans lequel la carte de probabilité calculée et la carte de probabilité cumulée comprennent chacune une pluralité de valeurs de densité de probabilité.

4. Procédé selon l'une quelconque des revendications précédentes, dans lequel la détermination d'une taille de carte et d'une résolution de carte de la carte de probabilité calculée et de la carte de probabilité cumulée est basée sur des ressources de calcul disponibles.

5. Procédé selon l'une quelconque des revendications précédentes, dans lequel

    tant les données de direction du regard pour l'œil gauche que les données de direction du regard pour l'œil droit comprennent un élément de données de direction du regard et un élément de données de largeur angulaire du regard, l'élément de données de direction du regard comprend des coordonnées d'origine de l'œil et des coordonnées de direction du regard, et
    les données de pose de la tête comprennent un élément de données d'orientation de la tête et un élément de données de plage d'amplitude uniquement oculaire.

6. Procédé selon la revendication 5, dans lequel

l'élément de données d'orientation de la tête comprend des coordonnées de position de la tête et des coordonnées d'orientation de la tête.

7. Procédé selon l'une des revendications 5 ou 6, dans lequel
l'élément de données de largeur angulaire du regard et l'élément de données de plage d'amplitude uniquement oculaire correspondent à une mesure de précision angulaire, en particulier à une fonction de densité de probabilité bidimensionnelle.

8. Procédé selon l'une quelconque des revendications précédentes, dans lequel

la transformation (S2) des données de direction du regard pour l'œil gauche et des données de direction du regard pour l'œil droit dans le système de coordonnées de la tête comporte
la génération d'une sphère ou d'une sphère partielle (H) autour de la tête de la personne (2), et
la projection des données de direction du regard pour l'œil gauche, des données de direction du regard pour l'œil droit et des données de pose de la tête obtenues sur la sphère ou la sphère partielle (H) générée.

9. Procédé selon l'une quelconque des revendications 3 ou 8, dans lequel
la génération (S4, S4.1) de la carte de probabilité cumulée comprend en outre le cumul (S4.2) de la carte de probabilité cumulée avec au moins une carte de probabilité précédemment cumulée calculée pour un instant antérieur.

10. Procédé selon l'une quelconque des revendications 3 ou 9, dans lequel

le calcul (S3) de la carte de probabilité dans le système de coordonnées de la tête comprend le calcul d'au moins une première carte de probabilité et une deuxième carte de probabilité respectivement sur la base des données de direction du regard pour l'œil gauche, des données de direction du regard pour l'œil droit et/ou des données de position de la tête obtenues,
la génération (S4, S4.1) de la carte de probabilité cumulée comporte le cumul de la première carte de probabilité et de la deuxième carte de probabilité afin de générer la carte de probabilité cumulée par multiplication d'éléments spatiaux discrets correspondants de la première carte de probabilité et de la deuxième carte de probabilité pour générer un élément spatial correspondant de la carte de probabilité cumulée.

11. Procédé selon l'une quelconque des revendications précédentes, dans lequel
à l'étape de détermination (S5) d'une zone d'intérêt sur la base de la carte de probabilité calculée, la génération (S5.1) d'une première zone d'intérêt candidate et d'au moins une deuxième zone d'intérêt candidate dans le système de coordonnées de la tête, le calcul (S5.2), pour la première zone d'intérêt candidate et l'au moins une deuxième zone d'intérêt candidate, d'une valeur de probabilité respective sur la base de la carte de probabilité, et par sélection (S5.3), parmi la première zone d'intérêt candidate et l'au moins une deuxième zone d'intérêt, de la zone ayant la valeur de probabilité calculée la plus élevée en tant que zone d'intérêt déterminée.

12. Programme informatique comportant des moyens de code de programme pour exécuter les étapes selon l'une quelconque des revendications précédentes lorsque le programme est exécuté sur un ordinateur ou un processeur de signaux numériques.

13. Système de détermination d'une zone d'intérêt d'une personne (2) à partir d'une direction spatiale du regard de la personne sur la base de données mesurées comportant des données de pose de la tête et/ou de direction du regard oculaire, le système comprenant

un moyen d'acquisition de données (8) pour obtenir, à partir d'au moins un capteur, des données de direction du regard pour l'œil gauche concernant l'œil gauche de la personne (2) et/ou des données de direction du regard pour l'œil droit concernant l'œil droit de la personne (2), et obtenir des données de pose de la tête comportant une direction de pose de la tête de la personne (2), et pour transformer les données de direction du regard pour l'œil gauche et/ou les données de direction du regard pour l'œil droit obtenues dans le système de coordonnées de la tête ;
un ensemble processeur configuré pour calculer une carte de probabilité spatiale comportant des valeurs de densité de probabilité dans le système de coordonnées de la tête sur la base des données de direction du regard pour l'œil gauche et/ou des données de direction du regard pour l'œil droit obtenues, et des données de pose de la tête, pour calculer la carte de probabilité sous la forme d'une carte de probabilité cumulée sur la base des données de pose de la tête obtenues et des données de direction du regard pour l'œil gauche transformées et/ou des données de direction du regard pour l'œil droit transformées,

le système de coordonnées de la tête étant généré par une sphère ou une sphère partielle centrée sur la tête de la personne, et

les valeurs de densité de probabilité de la carte de probabilité spatiale définissant une distribution de probabilité spatiale de la direction du regard pour l'œil gauche et/ou de la direction du regard pour l'œil droit et/ou de la direction de pose de la tête, et

l'ensemble processeur étant configuré en outre pour déterminer la zone d'intérêt en générant (S5.1) au moins une zone d'intérêt candidate définie par un polygone comportant une pluralité de points d'angle dans le système de coordonnées de la tête sur la base de la carte de probabilité calculée ; en calculant (S5.2), pour l'au moins une zone d'intérêt candidate, une valeur de probabilité, la zone d'intérêt étant déterminée sur la base de la carte de probabilité cumulée, en intégrant les valeurs de densité de probabilité de la carte de probabilité respectivement sur l'au moins une zone d'intérêt candidate, et en

sélection (S5.3) de l'au moins une zone d'intérêt candidate en tant que zone d'intérêt déterminée dans le cas où la valeur de probabilité calculée est supérieure ou égale à un seuil, et

une interface (18) pour fournir en sortie la zone d'intérêt déterminée à un système d'assistance, en particulier un système d'assistance à la conduite, un système d'assistance à l'autonomie à domicile ou un système autonome collaboratif, destiné à aider la personne (2) à réaliser une tâche.

S1, S2, S3

1

$P_{left}$

2

$P_{right}$

$P_{head}$

$P_{acc}$

SELECTED AOI

CANDIDATE AOIs

S4

S5, S6

FIG. 1

OBTAINING LEFT AND RIGHT
GAZE DIRECTION MEASURES,
HEAD POSE MEASURE — S1

↓

TRANSFORMING INTO HEAD
COORDINATE SYSTEM — S2

↓

CALCULATING FIRST, SECOND
AND THIRD PROBABILITY MAPS — S3

↓

GENERATING ACCUMULATED
PROBABILITY MAP — S4

↓

DETERMINING AREA-OF-
INTEREST — S5

↓

OUTPUTTING DETERMINED
AREA-OF-INTEREST — S6

FIG. 2

FIG. 3

FIG. 4

FIG. 5

FIG. 6

$$P_{left}(g_l, \sigma_l) \qquad P_{right}(g_r, \sigma_r) \qquad P_{head}(g_h, \sigma_h)$$

30

CANDIDATE AREA-OF-INTEREST    30.1

30.4

31

30.3

30.2

$P_{acc}$

FIG. 7

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Non-patent literature cited in the description

- An integrated head pose and eye gaze tracking approach to non-intrusive visual attention measurement for wide FOV simulators. **HUA CAI** ; **YINGZI LIN**. Virtual Reality. Springer, 2012
- Probabilistic estimation of the gaze region of the driver using dense classification.. **SUMIT JHA** ; **CARLOS BUSSO**. 21st International conference on intelligent transportation systems (ITSC). IEEE, 04 November 2018, 697-702

- **SUMIT JHA** ; **CARLOS BUSSO**. Estimating of gaze region using two-dimensional probabilistic maps constructed using convolutional neural networks. *IEEE International Conference on Acoustics, Speech and Signal Processing*, 12 May 2019, 3792-3796